# EUROPÄISCHE PATENTSCHRIFT

(11) **EP 2 282 884 B1**
(45) Veröffentlichungstag und Bekanntmachung des Hinweises auf die Patenterteilung: **08.03.2017**
(21) Anmeldenummer: 08801638.1
(22) Anmeldetag: 20.08.2008
(51) Int. Cl.: B29C 67/00, D01D 5/26, D01F 6/00

(54) **FASERN ZUR VERWENDUNG BEI DER HERSTELLUNG EINES SCHICHTWEISE AUFGEBAUTEN FORMKÖRPERS**
FIBRES FOR USE IN THE PRODUCTION OF A MOULDED BODY FORMED IN LAYERS
FIBRES EMPLOYÉES DANS LA FABRICATION D'UN CORPS MOULÉ ASSEMBLÉ PAR COUCHES

(30) Priorität: 09.05.2008 DE 102008022946
(43) Veröffentlichungstag der Anmeldung: 16.02.2011
(60) Teilanmeldung: 11150236.5
(73) Patentinhaber: FIT AG, 92331 Lupburg (DE)
(72) Erfinder: FRUTH, Carl, Johannes, 92331 Parsberg (DE); FEULNER, Robert, 91058 Erlangen (DE); SCHMACHTENBERG, Ernst, 52062 Aachen (DE); RIETZEL, Dominik, 91056 Erlangen (DE)
(74) Vertreter: Kramer Barske Schmidtchen Patentanwälte PartG mbB
(86) Internationale Anmeldenummer: PCT/EP2008/006857
(87) Internationale Veröffentlichungsnummer: WO 2009/135521

(56) Entgegenhaltungen:
- EP-A- 1 634 693
- WO-A-02/45940
- WO-A-03/035353
- WO-A2-2004/113042
- DE-A1-102005 024 433
- US-A- 5 731 388
- US-A- 5 936 861
- US-A1- 2008 018 018

## Beschreibung

### TECHNISCHES GEBIET

Die Erfindung betrifft ein Verfahren zum Herstellen von Fasern und ein Verfahren zum Herstellen eines Formkörpers durch schichtweisen Aufbau. Ferner betrifft die Erfindung einen Formkörper, der eine Vielzahl von aufeinander liegenden und miteinander verbundenen Schichten umfasst, und die Verwendung von Fasern zur Herstellung eines Formkörpers.

### HINTERGRUND DER ERFINDUNG

Heutzutage werden unterschiedlichste Fertigungsanlagen zur Herstellung von Erzeugnissen bzw. Bauteilen eingesetzt, die bestimmte definierte Bauräume aufweisen. In den Bauräumen dieser Fertigungsanlagen können auf Grund der Art der Herstellungsverfahren oftmals ein oder mehrere Bauteile in einem Fertigungsgang erzeugt werden. Derartige Verfahren und Vorrichtungen sind beispielsweise allgemein unter dem Begriff "Solid Freeform Fabrication" (SFF-Systeme) bekannt und hierunter sind grundsätzlich z.B. Fertigungsverfahren- und -anlagen zu subsumieren, die dreidimensionale Bauteile direkt aus 3D-CAD-Daten fertigen können. Ferner zählen hierzu auch alle bekannten Rapid Prototyping- und Rapid Manufacturing-Verfahren.

Ein gemeinsames Merkmal aller bekannten SFF-Systeme ist der schichtweise Aufbau eines Werkstücks. In den letzten Jahren finden insbesondere derartige SFF-Systeme eine Anwendung, bei denen die einzelnen Schichten aus einem Pulver oder pulverähnlichen Materialien gefertigt werden. Insbesondere werden metallische Bauteile über die Schmelzphase durch das sogenannte Lasersintern oder Elektronenstrahlschmelzen erzeugt. Auch das sogenannte selektive Lasersintern (SLS-Verfahren) arbeitet nach diesem Prinzip. Beim selektiven Maskensintern (SMS-Verfahren) wird anstelle eines Laserstrahls eine breitflächige Strahlungsquelle wie z.B. ein Array aus Infrarotstrahlern zum Erhärten bzw. Verfestigen definierter Schichtbereiche eingesetzt. Über eine, für jede Schicht neu zu generierende, Maske erfolgt die Festlegung, welche Bereiche einer Schicht zu erhärten bzw. zu verfestigen sind

Alle diese Verfahren basieren darauf, dass zuerst eine Schicht aus losem, d.h. unverfestigtem Beschichtungsmaterial aufgebracht wird, die eine genau definierte Schichtdicke und Formoberfläche (normalerweise eine plane Oberfläche) hat. Die für die vorliegende Erfindung zum Einsatz kommenden Schichtaufbauverfahren können beispielsweise folgende Verfahren sein: 3DP der Firma Zcorp, Polyjet der Firma Objet, SMS der Firma Sintermask, SLS sowie DMLS der Firmen EOS , SLA sowie IMLS der Firma 3D Systems, Lasercusing der Firma Konzeptlaser, Laserschmelzen der Firma MCP, Electron Beam Melting der Firma Arcam und Electron Beam Sintering sein.

Zur schnellen und kostengünstigen Herstellung von Prototypen oder Kleinserien sind seit längerem die eingangs erwähnten Schichtbausysteme bekannt. Die Hauptanwendung der bisher industriell eingesetzten Rapid Prototyping Systeme liegt in der Herstellung von Bauteilen aus organischen Werkstoffen wie Polymeren und Wachsen. Mehr und mehr finden aber auch Rapid Prototyping Systeme bei der Herstellung von metallischen Bauteilen Verwendung. Insbesondere werden metallische Bauteile über die Schmelzphase durch das sogenannte Lasersintern oder Elektronenstrahlschmelzen erzeugt.

Normalerweise werden bei den genannten Verfahren 3D-CAD-Daten zunächst in eine Vielzahl von einzelnen Schichten bzw. Höhenschnitte zerlegt, um daraus im eigentlichen Herstellungsprozess das Werkstück aufzubauen. Es müssen also für alle bekannten Schichtbauverfahren zur Herstellung von dreidimensionalen Körpern für jede Schicht die Körperumrissdaten vorhanden sein. Körperumrissdaten sind hier die Daten, die in der jeweiligen Schicht genau festlegen, welche Bereiche der Schicht je nach Art der eingesetzten Schichtbautechnologie zu schmelzen oder zu sintern sind. Ein solches Verfahren ist beispielsweise in der internationalen Patentanmeldung PCT/EP2004/002965 beschrieben. Dabei wird eine Schicht hergestellt, indem auf eine Unterlage oder eine bereits gefertigte Schicht eine Schicht vorbestimmter Dicke aus einem Pulver aufgebracht wird und dieses Pulver beispielsweise durch Laserbestrahlung gezielt in den Bereichen, die die jeweilige Schicht des Formkörpers bilden, verfestigt wird und sich dabei mit darunter befindlichen verfestigten Bereichen der vorhergehenden Schicht verbindet. Nach Fertigstellung der obersten Schicht wird das nicht verfestigte Pulver entfernt, so dass der aus dem verfestigten Pulver bestehende Formkörper übrig bleibt. Voraussetzung für diese Verfahren ist als Ausgangsmaterial ein Pulver, das einerseits in Schichten definierter Dicke auf eine Unterlage aufbringbar ist und das andererseits durch gezieltes Aufschmelzen oder Sintern oder in Berührung bringen mit einer des Pulver vernetzenden Flüssigkeit in wohldefinierter Weise gezielt verfestigbar ist, und dabei mit bereits verfestigten Bereichen einer vorhergehenden Schicht eine mechanische Verbindung eingeht.

Solche Pulver, die beispielsweise aus Metallen, Metalllegierungen oder Thermoplasten, insbesondere jene Polyamide mit einer langen Kohlenwasserstoffkette zwischen den Amidgruppen, wie PA 11 oder PA 12 bestehen, sind in ihrer Herstellung verhältnismäßig aufwendig, da die Pulverteilchen innerhalb enger Grenzen festgelegte Abmessungen (Durchmesser, größter Durchmesser zu kleinster Durchmesser bei elliptischen Teilchen, Oberflächenrauhigkeit usw.) haben müssen.

Aus der genannten Druckschrift PCT/EP2004/002965 ist es bekannt, dem thermoplastischen Pulver zur Verbesserung der mechanischen Eigenschaften Zusatzstoffe, wie Glaskügelchen, Aluminiumflocken oder auch versteifende- oder verstärkende Fasern, beispielweise Carbon-, Glas-, Keramik- oder Borfasern zuzusetzen, deren Volumenanteil bis zu 30% des Pulvers betragen kann und deren Längenverteilung so gewählt ist, dass ein möglichst geringer Prozentsatz der Fasern aus der Oberfläche der Pulverteilchen, in die die Fasern bei der Herstellung des Pulvers eingelagert werden, herausragen. Dadurch ist gewährleistet, dass die Vernetzung der Pulverteilchen bzw. die Verfestigung des Pulvers bei der Laserbestrahlung nicht beeinträchtigt wird.

In den Druckschriften EP 1 058 675 B1 und US 4,938,816 sind Verfahren zum Lasersintern offenbart, bei dem ein Keramik- oder andere Pulver zum Einsatz kommen. Aus der DE 195 14 740 CI ist eine Vorrichtung zum Lasersintern, insbesondere von Metallpulver bekannt. In der DE 10 2004 008 168 A1 ist eine Vorrichtung und ein Verfahren zum Auftragen von Fluiden gezeigt. Schließlich ist aus der bekannt, beim Lasersintern das Pulver beim oder vor dem Verfestigen mit dem Lasermittel eine Schicht zu verdichten, um eine hohe Volumendichte zu erhalten.

Ein Verfahren zum Herstellen von Zellulose-Stapelfasern aus NMMO-haltigen Spinnfäden ist aus der DE 10 2005 024 433 A1 bekannt. Bei diesen speziellen Stapelfasern soll insbesondere eine Erhöhung der Schlingenfestigkeit erzielt werden. Es soll insbesondere das bekannte Lyocell-Verfahren verwendet werden. Eine Verwendung derartiger Fasern zur Herstellung eines schichtweise aufgebauten Formkörpers ist weder offenbart noch kann eine Eignung hierfür festgestellt werden.

Aus der WO 03/035353 A1 ist ein Verfahren zur Herstellung eines Schichtkörpers unter Verwendung eines Elektronenstrahls offenbart. Das bekannte Verfahren enthält die Schritte: Vorsehen einer unverfestigten Schicht aus Harz und Zusatzstoffe wie z.B. Fasern, Partikel oder Pulver; Verfestigen der Schicht unter Verwendung eines Elektronenstrahls und wiederholen dieser Schritte zur Erzeugung eines Schichtkörpers mit der gewünschten Kontur. Bei diesem Verfahren dienen die genannten Zusatzstoffe zur Verstärkung der herzustellenden Schichten. Jedoch wird hier ein Verfestigen der Schicht einzig durch das Aushärten des Harzes erzielt. Die US 5,731,388 A offenbart ein speziell photoerhärtbares Harz, das zur Herstellung stereolithographischer Gegenstände verwendet werden kann. Wiederum erfolgt ein Erhärten des Harzes und Zusatzstoffe wie Festpartikel dienen als Verstärkung.

Auch die US 5,936,861 zeigt eine faserverstärkte Matrix zur Herstellung dreidimensionaler Schichtkörper. Wie bei dem oben erläuterten Stand der Technik erfolgt ein Erhärten des Harzes und Zusatzstoffe wie Festpartikel dienen als Verstärkung.

Die EP 1 634 693 A1 offenbart eine Mischung sinterbarer Pulver für ein Rapid-Prototyping-Verfahren. Diese Mischung umfasst eine polymerische Matrix in Pulverform und ein Verstärkungsmaterial in Form von Fasern. Weitere Zusatzstoffe wie pulverförmiges Aluminium oder pulverförmiges Graphit können ebenfalls in die polymerische Matrix eingemischt werden. Widerum ist bei der Verwendung dieser Mischung in einem Rapid-Prototyping-Verfahren eine Erhärtung der polymerischen Matrix vorgesehen; die Fasern dienen lediglich als Verstärkungsmaterial der polymerischen Matrix.

WO 2004/113042 A2 offenbart die Verwendung von Fasern, gemäß dem Oberbegriff des Anspruchs 13.

Die bekannten Einrichtungen und Verfahren haben jedoch möglicherweise den Nachteil, dass das die einzelnen Schichten bildende Beschichtungsmaterial teuer ist und unter Umständen entweder nur in einem sehr engen Prozessfenster funktionieren oder eine geringe Fehlertoleranz aufweisen. Ferner ist es auch möglich, dass derartige Verfahren besonders hohe Anforderungen an die zu verwendenden Werkstoffe stellen, da die während des Beschichtgungsprozesses eingebrachten Kräfte abhängig von der Fließfähigkeit der Pulver bzw. der Viskosität der Pasten sind. Insbesondere sogenannte spratzige oder faserförmige Pulver können deshalb im gegensatz zu sphärischen Pulvern problematisch mit bestehenden Einrichtungen und Verfahren zu verarbeiten sein oder erreichen bei der Beschichtung keine ausreichende Schüttdichte, um bei der Verarbeitung eine ausreichende Bauteildichte zu erlangen. Oftmals werden deshalb Pulver mit sphärischen Partikelgeometrien verwendet, die häufig mit Fließverbesserern wie zum Beispiel Ruß oder SiO₂ gemischt werden, um diese Pulver für die üblichen Beschichtungseinrichtungen verarbeitbar zu machen.

Die bekannten Beschichtungsverfahren und Einrichtungen verursachen möglicherweise Schwierigkeiten, wenn die zu beschichtende Fläche unterschiedliche Zustände aufweist, beispielsweise wenn unausgehärtetes Material und ausgehärtetes Material oder loses Pulver und aufgeschmolzenes Pulver vorhanden ist.

### DARSTELLUNG DER ERFINDUNG

Ein der vorliegenden Erfindung zugrundeliegendes technisches Problem kann darin bestehen, eine neues Verfahren zum Herstellen eines Formkörpers aus einzelnen verfestigten Schichten bereitzustellen, bei dem eines oder mehrere der oben genannten Probleme weniger stark auftritt oder möglicherweise sogar beseitigt ist.

Gemäß einem Aspekt der vorliegenden Erfindung wird das eingangs genannte technische Problem dadurch gelöst, dass ein Verfahren zum Herstellen eines Formkörpers durch schichtweisen Aufbau bereit gestellt wird, gemäß dem Anspruch 1.

Gemäß der vorliegenden Erfindung werden erstmals als Grundmaterial Fasern verwendet, die zur Herstellung eines aus einzelnen, miteinander verbundenen Schichten bestehenden Formkörpers gemäß einem Solid Freeform Fabrication-Verfahren ausgebildet sind.

Die Fasern werden in dem Solid Freeform Fabrication-Verfahren in im Wesentlichen aus losen Fasern bestehenden Schichten ausgebreitet, die dann in vorbestimmten Bereichen einer Faserschicht durch Energieeinbringung miteinander verbunden werden und damit verfestigte Bereiche in dieser Faserschicht bilden. Dabei werden die verfestigten

Bereiche einer Faserschicht mit den verfestigten Bereichen einer bereits vorhandenen Faserschicht verbunden.

Eine beispielhafte Ausführungsform der vorliegenden Erfindung kann darin bestehen, dass die Fasern im Gegensatz zu herkömmlichen, möglichst an eine Kugelform angenäherte Pulverteilchen auf einfacher Weise mit genau vorgegebenen Abmessungen hergestellt werden, wodurch die Fasern und das daraus bestehende Pulver kostengünstig ist und gezielte Eigenschaften hat.

Gemäß einer weiteren beispielhaften Ausführungsform der vorliegenden Erfindung können die Fasern aus unterschiedlichem Material bestehen und/oder unterschiedliche Abmessungen aufweisen und somit genau auf die jeweiligen Anforderungen abgestimmt werden.

Beispielsweise beträgt der Durchmesser der Fasern zwischen 0,001 und 0,5 mm, vorzugsweise zwischen 0,01 und 0,1 mm. Das Verhältnis von mittlerem Durchmesser zu mittlerer Länge der Fasern liegt bei einer weiteren beispielhaften Ausführungsform der vorliegenden Erfindung vorteilhafterweise zwischen 0,1 und 1000, vorzugsweise zwischen 0,5 und 3. Mit den vorgenannten Dimensionen kann es möglich sein, die Fasern in einer homogenen dünnen Schicht aufzubringen, deren Dicke beispielweise zwischen dem Ein- und Zehnfachen einer Faserabmessung, vorzugsweise des Faserdurchmessers liegt.

Bei einer weiteren beispielhaften Ausführungsform der vorliegenden Erfindung sind die Endflächen wenigstens einiger der Faserstücke an ihren Kanten gebrochen bzw. abgeschrägt. Dadurch wird die gegenseitige mechanische Verbindung zwischen den Faserstücken, beispielsweise beim Aufschmelzen oder Sintern, verbessert.

Bei einer weiteren beispielhaften Ausführungsform der vorliegenden Erfindung enthalten die Fasern wenigstens eines der folgenden Materialien: Thermoplaste wie Polyamid (PA), Polypropylen (PP), Polylactid (PLA), Polybutylenterephthalat (PBT) oder Polyethylenterephthalat (PET) etc.

Den Fasern können z.B. ein aus Teilchen bestehender Füllstoff zugesetzt sein, wobei die Füllstoffteilchen in der durch die miteinander verbundenen Fasern bestehenden verfestigten Bereichen ohne feste Verbindung mit den Faserstücken eingeschlossen oder selbst
miteinander verbunden oder sowohl mit den Faserstücken als auch miteinander verbunden sein können. Der Anteil des Füllstoffes beträgt bevorzugt weniger als 50 Volumenprozente, damit die durch die Fasern gebildete Matrix aufrecht erhalten bleibt. Der Füllstoff kann beispielsweise aus Ruß, Carbon, Glas, Metalloxid oder Keramik bestehen. Je nach bevorzugter Wirkung des Füllstoffes sind die Teilchen des Füllstoffes faserförmig oder sphärisch. Die Abmessungen der Füllstoffteilchen betragen vorteilhafterweise zwischen 0,005 und 0,5mm.

Fasern können aus einem Material bestehen, das zu länglichen Fasern, die einen mittleren Durchmesser zwischen 0,01 mm und 0,1 mm haben, extrudiert wurde. Dann wurden die Fasern zu Faserstücken abgelängt, die zum Herstellen eines aus einzelnen, miteinander verbundenen Schichten bestehenden Formkörpers gemäß einem Solid Freeform Fabrication-Verfahren geeignet sind.

Zum Ablängen der Fasern kann wenigstens ein rotierendes Schneid- oder Prallelement verwendet werden.

Ein weiterer Aspekt der vorliegenden Erfindung besteht darin, dass ein Formkörper geschaffen ist, gemäß dem Anspruch 12.

Der guten Ordnung halber ist anzumerken, dass Fasern im Sinne der vorliegenden Erfindung Gebilde sind, deren Durchmesser kleiner ist als deren Länge, also ein im Verhältnis zur Länge dünnes und eventuell flexibles Gebilde. Beispielsweise sind Fasern allgemein auch Gebilde, deren geometrische Form sich durch einen extrudierten Querschnitt ergibt. Grundsätzlich kann auch gelten, dass Fasern Gebilde sind, die grundsätzlich zylinderförmig sind. Die Grundform des Zylinders kann aber beliebig sein, nur vorzugsweise ist es ein Kreiszylinder. Auch schiefe Zylinder fallen unter die vorliegende Definition von Fasern

Die mittlere Länge und der mittlere Durchmesser der Fasern werden vorzugsweise durch mikroskopische Untersuchungen sowie optische Partikelmessungen ermittelt. Hierbei wird z.B. die Extrusionsrichtung, also die Zylinderachse als Länge und der Umkreis der Querschnittsfläche, also der Grundfläche eines Zylinders als Durchmesser bezeichnet. Die mittleren Werte können z.B. dadurch errechnet werden, dass die gemessen bzw. ermittelten Werte einer definierten Anzahl von Fasern summiert werden und dieser Summenwert durch die Anzahl von vermessenen Fasern geteilt wird. Die Anzahl der Fasern kann z.B. 10, 100, 1.000, 10.000, oder 100.000 oder mehr betragen. Auch alle möglichen Zwischenwerte sind expressis verbis als offenbart anzusehen. Abschließend ist anzumerken, dass auch bekannte computergestützte quantitative Messungen zur Ermittlung der mittleren Faserlängen und Durchmesser herangezogen werden können, z.B. unter Zuhilfenahme von Computertomographie.

### KURZBESCHREIBUNG DER ZEICHNUNGEN

Im Folgenden sind zur weiteren Erläuterung und zum besseren Verständnis mehrere beispielhafte Ausführungsformen der vorliegenden Erfindung unter Bezugnahme auf die beigefügten Zeichnungen näher beschrieben und erläutert. Es zeigt:
- Fig. 1.: zeigt perspektivische Ansichten von Fasern, wie sie für das erfindungsgemäße Verfahren verwendet werden,
- Fig. 2.: zeigt ein aus unterschiedlichen Faserstücken zusammengesetztes Faserpulver,
- Fig. 3.: zeigt Beispiele für Querschnitt von Fasern,
- Fig. 4.: zeigt ein aus Faserstücken und Füllstoffteilchen zusammengesetztes Faserpulver,
- Fig. 5.: zeigt eine schematische Schnittansicht einer Vorrichtung zur Herstellung eines Formkörpers durch schichtweisen Aufbau,
- Fig. 6.: zeigt einen Ausschnitt eines aus Faserstücken bestehenden Faserpulvers vor Verfestigung, und
- Fig. 7.: zeigt das Faserpulver gemäß Fig. 5 nach Verfestigung.
- Fig. 8: eine Abfolge von Verfahrensschritten gemäß einer ersten beispielhaften Ausführungsform der vorliegenden Erfindung zur Herstellung eines Formkörpers aus mehreren Faserschichten,
- Fig. 9: eine Abfolge von mehreren Verfahrensschritten gemäß einer zweiten beispielhaften Ausführungsform eines erfindungsgemäßen Verfahrens zur Herstellung eines Formkörpers aus mehreren Faserschichten,
- Fig. 10: eine beispielhafte Ausführungsform einer erfindungsgemäßen Vorrichtung mit mehreren Materialauftrags- und Reduziereinrichtungen,
- Fig. 11: eine weitere beispielhafte Ausführungsform einer kombinierten Aufbring- und Reduziereinrichtung,
- Fig. 12: eine weitere beispielhafte Ausführungsform eines Teils einer erfindungsgemäßen Vorrichtung mit kombinierter Materialauftrag- und Reduziereinrichtung,
- Fig. 13: mehrere beispielhafte, schematisch dargestellte Querschnittsansichten von Oberflächenformen von Beschichtungsmaterial nach dem Reduzierschritt gemäß einer beispielhaften Ausführungsform eines erfindungsgemäßen Verfahrens zur Herstellung eines Formkörpers aus mehreren Faserschichten,
- Fig. 14: eine schematische Querschnittsansicht eines Teils eines erfindungsgemäßen Verfahrens zum Reduzieren einer ersten Schichtdicke, und
- Fig. 15-17: beispielhafte Querschnittsformen von Reduziereinrichtungen bzw. kombiniert mit Glättungseinrichtungen zur Verwendung in einer erfindungsgemäßen Ausführungsform der vorliegenden Erfindung.

### BESCHREIBUNG VON BEISPIELHAFTEN AUSFÜHRUNGSFORMEN DER VORLIEGENDEN ERFINDUNG

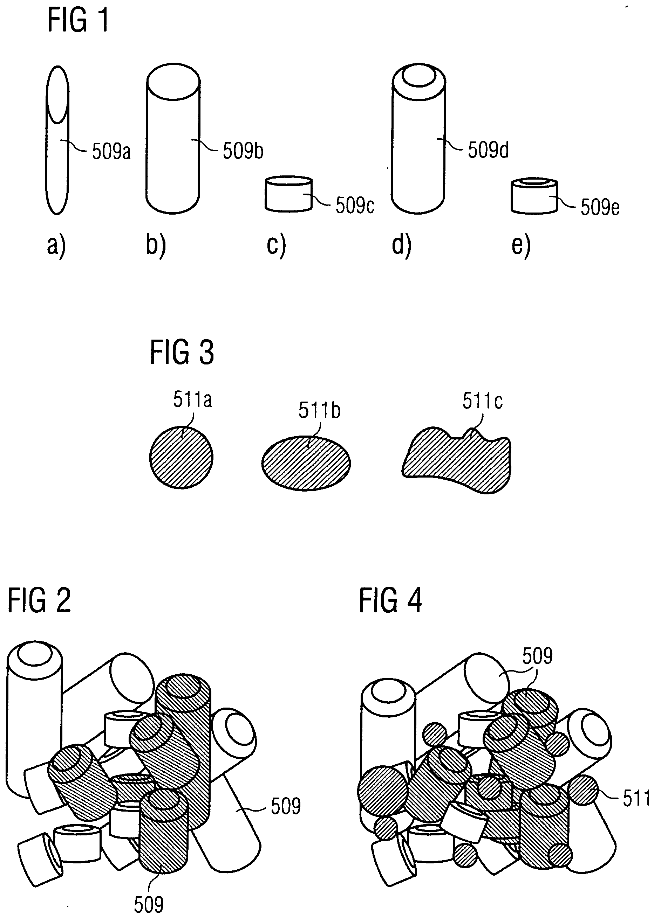

Gemäß Fig. 1 können für das erfindungsgemäße Verfahren der verwendende Pulver Faserstücke 9 mit unterschiedlichen Querschnittformen und unterschiedlicher Länge sowie unterschiedlicher Gestaltung der Stirnflächen verwendet werden.

In der vorliegenden Anmeldung wird der Begriff "Faser" oder "Faserstück" für ein Gebilde oder Teilchen verwendet, dessen Länge größer ist als dessen Durchmesser, wobei z.B. die Mantelfläche mindestens in Längsrichtung der Faser bereichsweise mit konstantem Profil ausgebildet ist. Die Fasern werden z.B. durch Extrusion des Fasermaterials durch einen Extrusionskopf mit Öffnungen hergestellt, deren Form den Querschnitt der Fasern definiert.

Fig. 1 a zeigt ein Faserstück 509a mit elliptischem Querschnitt, Fig. 1b zeigt ein Faserstück 509b mit kreisförmigem Querschnitt, das Faserstück 2c gemäß Fig. 1c hat eine im Vergleich zu seinem Durchmesser kürzere axiale Länge, bei den Faserstücken 502d, 5022e gemäß Fig. 1d und 1e ist die jeweils sichtbare Stirnfläche gebrochen bzw. abgeschrägt.

Die in Fig. 1 beispielhaft dargestellten Faserstücke 509a-509e werden dadurch hergestellt, dass die einen Extruder verlassenden Fasern in an sich bekannter Weise unmittelbar nach Verlassen des Extruders und nach Abkühlung mechanisch zu den Faserstücken 509a-509e mit vorbestimmter Länge und in vorbestimmter Weise gestalteter Stirnfläche abgelängt werden.

Fig. 2 zeigt ein aus unterschiedlichen Faserstücken 509 zusammengesetztes Pulver, wobei unterschiedliche Faserstücke 509 zusätzlich aus unterschiedlichem Material bestehen können.

Die in Fig. 1 beispielhaft dargestellten Faserstücke 509a-509e können hinsichtlich ihrer Geometrie in genau vorbestimmter Weise gefertigt werden, so dass auch das Pulver gemäß Fig. 2 eine genau vorbestimmte Zusammensetzung haben kann.

Der Durchmesser der für das Pulver verwendeten Faserstücke 509 liegt vorzugsweise zwischen 0,01 und 0,5 mm, besonders bevorzugt zwischen 0,01 und 0,1 mm. Das Verhältnis von Durchmesser zu Länge der Faserstücke 509 liegt vorzugsweise zwischen 0,1 und 1000, besonders bevorzugt zwischen 0,5 und 3. Beispielhafte Querschnitte von Fasern sind in der Fig. 3 gezeigt, z.B. kreisförmig 511a, elliptisch 511b oder unregelmäßig geformt 511c.

Bevorzugte, extrudierbare Materialien für die Faserstücke 509 sind beispielsweise Thermoplaste wie Polypropylen oder Polyethylenterephthalat.

Die Materialien sind im Hinblick auf die erforderliche Festigkeit und das beabsichtigte Verfestigungsverfahren für die Verfestigung des Pulvers, das die Faserstücke 509 enthält, gewählt. Aus unterschiedlichsten Gründen, wie Beeinflussung der Festigkeit, des Schrumpfverhaltens usw. kann das Pulver zusätzlich zu den Faserstücken 509, die das Gerüst der noch zu beschreibenden verfestigten Bereiche einer Pulverschicht 519 bilden, Hilfs- und Füllstoffe enthalten, die selbst faserförmig sein können, aber bevorzugt aus sphärischen, plättchenförmigen oder spratzigen Teilchen bestehen. Je nach Anwendung bestehen diese Füll- und Hilfsstoffe aus Ruß, Carbon, Glas, Metalloxiden, Keramiken oder polymeren Werkstoffen. Ihr Anteil beträgt vorzugsweise weniger als 50 Volumenprozente des Pulvers.

Fig. 4 zeigt ein Pulver, das aus unterschiedlichen Faserstücken 509 ähnlich dem Pulver der Fig. 2 besteht und zusätzlich Hilfsstoffe in Form kugelförmiger Teilchen 511 a enthält.

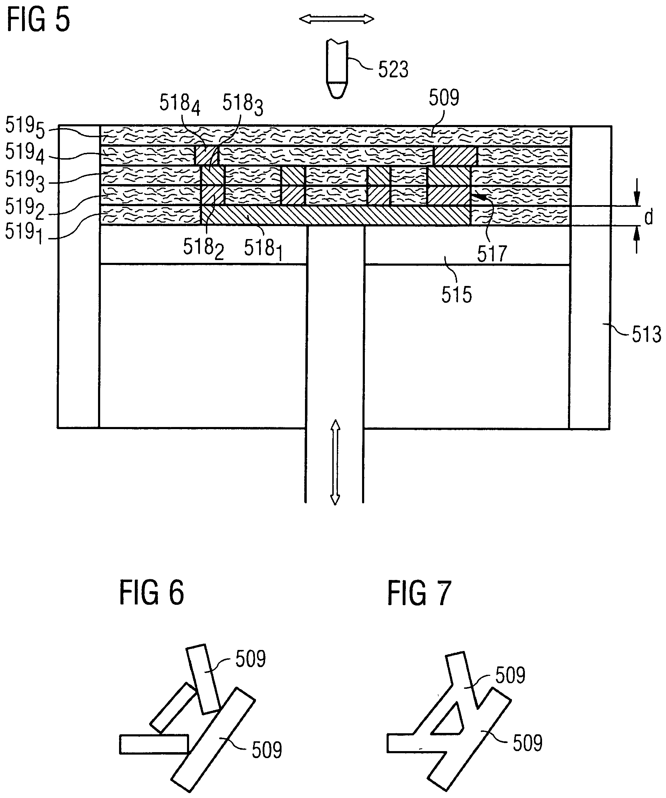

Fig. 5 zeigt schematisch einen Schnitt durch eine Vorrichtung zur Herstellung eines Formkörpers 517 durch schichtweisen Aufbau, in der das erfindungsgemäß ausgebildete Pulver verwendet werden kann.

Gemäß Fig. 5 ist innerhalb eines zumindest nach oben offenen Zylinders 513 eine Plattform 515 mittels eines nicht dargestellten Antriebs auf- und abwärts bewegbar. Die Außenkontur der Plattform 515 ist auf die Innenkontur des Zylinders 513 abgestimmt, so dass die Plattform 515 längs ihres Außenrandes an der Innenseite des Zylinders 513 geführt ist.

Ein insgesamt mit 517 bezeichneter Formkörper, dessen bereits ausgebildete Bereiche 518 schraffiert sind, wird schichtweise durch Übereinanderanordnung von Schichten 519₁ bis 519ₙ hergestellt, die bevorzugt jeweils die gleiche, vorbestimmte Dicke d haben.

Fig. 5 stellt den Formkörper 517 in dem Zustand dar, in dem vier Schichten 519₁ bis 519₄ bereits ausgebildet sind und eine fünfte Schicht 519₅ ausgebildet wird. Die Schicht 519₅ wird, wie die vorhergehenden Schichten, dadurch ausgebildet, dass die Plattform 505 nach Ausbilden einer Schicht um die Strecke d in dem Zylinder 503 abgesenkt wird und Pulver 511 in den frei werdenden Raum mittels einer nicht dargestellten Vorrichtung in an sich bekannter Weise eingebracht wird. Die konstante Dicke d der neuen Pulverschicht 509₅ kann dadurch erreicht werden, dass das Pulver leicht überfüllt wird und das Niveau des Pulvers anschließend mittels eines Schiebers, einer Presse usw. auf das Niveau des Oberrandes des Zylinders 503 egalisiert wird.

Anschließend wird eine Bestrahlungseinrichtung 523, beispielsweise ein einen gebündelten Laserstrahl abstrahlender Laserkopf, entsprechend CAD Daten des herzustellenden Formkörpers 507, die den Formkörper im Bereich der Schicht 519₅ beschreiben, gesteuert, wodurch das Pulver 511 beispielsweise durch Anschmelzen in den Bereichen verfestigt wird, die den Formkörper bilden, und in den anderen Bereichen unverfestigt bleibt. Die verfestigten Bereiche 518₁ bis 518₄ der Schichten 519₁ bis 519₄ sind schraffiert dargestellt.

Auf die vorbeschriebene Weise wird der gesamte Formkörper 517 schichtweise aufgebaut und kann nach Fertigstellung aus dem Werkzeug entnommen werden und steht nach anschließender Entfernung des losen Pulvers zur weiteren Verwendung zur Verfuegung.

Je nach Abmessungen der Faserstücke ordnen sich diese beim Aufbringen des Pulvers mehr oder weniger parallel zur Erstreckung der jeweiligen Schicht und parallel zueinander an, wobei die parallele Ausrichtung mit zunehmendem Verhältnis zwischen Länge des Faserstücks zu Durchmesser des Faserstücks zunimmt. Die Schichtdicke d beträgt bevorzugt das Drei- bis Fünffache des Durchmessers der Faserstücke mit größtem Durchmesser. (bitte überprüfen)

Fig. 6 zeigt ungeordnet angeordnete Faserstücke 509 des Pulvers 511 vor der Verfestigung.

Fig. 7 zeigt die Faserstücke der Fig. 6 nach Verfestigung, die dadurch geschieht, dass die Faserstücke 509 unter dem Laserstrahl oberflächlich angeschmolzen werden und miteinander verschmelzen. Wie ersichtlich, entsteht ein stabiles Fasergerüst, in dessen Hohlräume etwaige Füllstoffe eingelagert oder eingeschmolzen sind. Auch die Ausbildung von homogenen Schmelzefilmen ist durch diese Art der Materialeinbringung möglich.

Bei entsprechendem Längen- zu Durchmesserverhältnis der Faserstücke 509, bei dem die Fasern des nicht verfestigten Pulvers weitgehend parallel zueinander ausgerichtet und parallel zur Streckungsrichtung der Schichten gegebenenfalls in mehreren Lagen übereinander angeordnet liegen, entsteht ein Formkörper mit hohem Materialfüllungsgrad und guter Stabilität.

Bei geeignetem Material der Faserstücke kann die lokale Verfestigung auch dadurch erfolgen, dass der jeweilige zu verfestigende Schichtbereich gezielt mit einer Flüssigkeit besprüht wird, die zu einer die Faserstücke 509 unmittelbar miteinander verbindenden Reaktion führt und/ oder den Schichtbereich aushärtet und die Faserstücke dadurch miteinander verbindet.

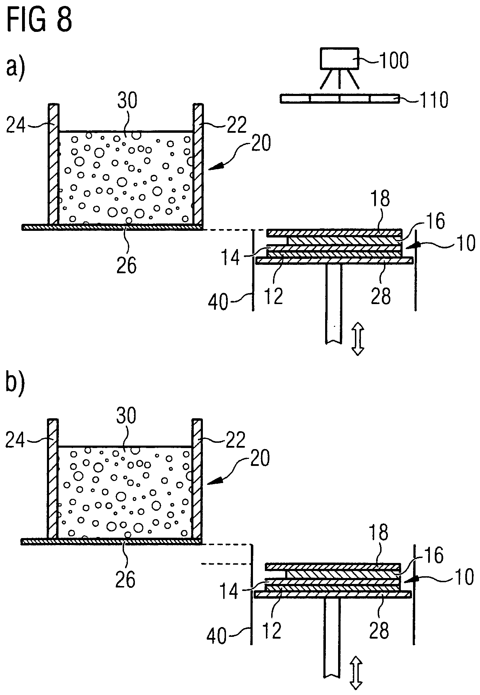

Eine weitere beispielhafte Ausführungsform eines erfindungsgemäßen Verfahrens zum Herstellen eines dreidimensionalen Körpers 10 ist in verschiedenen Verfahrensphasen in den Fig.Ba)-8g) gezeigt. Wie in der Fig. 8a) gezeigt, besteht der Körper 10 bereits aus mehreren übereinanderliegenden, verfestigten bzw. erhärteten Schichten 12, 14, 16, 18. Wie bei dem eingangs genannten bekannten Lasersinter-Verfahren oder gemäß der erwähnten Sintermask-Technologie wurde ein Beschichtungsmaterial 30 wie z.B. Pulver in vorbestimmten Bereichen erhärtet, verfestigt, angeschmolzen oder verschmolzen. Damit hat jede Schicht 12, 14, 16, 18 die gewünschte Kontur des herzustellenden Körpers 10.

Ein Behälter 20 ist in der Fig. 8a) im Vertikalschnitt schematisch gezeigt. Der Behälter 20 ist hier als Vorratsbehälter ausgebildet, in dem das lose Pulver 30 bevorratet ist. Der Behälter 20 weist Wände 22, 24 auf, die zusammen mit einem Boden 26 den Behälter 20 bilden. Die Behälterwände 22, 24 bilden zusammen mit hier nicht dargestellten weiteren Behälterwänden und dem Boden 26 einen beispielsweise oben offenen Vorratsraum, in dem das zu verarbeitende Pulver 30 gelagert ist. Alternativ kann der Behälter 20 auch geschlossen sein.

Der herzustellende Körper 10 ruht auf einer vertikal beweglichen Trägerplatte 28, die über hier nicht dargestellte Mittel auf und abwärts bewegbar ist. Oberhalb des hier teilweise erstellten Körpers 10 befindet sich eine Strahlungsquelle 100, die beispielsweise ein Array aus einer Vielzahl von Infrarotstrahlern umfassen kann. Alternativ hierzu ist es auch möglich, als Strahlungsquelle einen zu richtenden Laserstrahl vorzusehen.

Bei der hier gezeigten beispielhaften Anordnung befindet sich unterhalb der Strahlungsquelle 100 eine Maske 110, die beispielsweise durch Bedrucken einer Glasplatte geschaffen wird. Auf dieser Maske 110 sind die zu verfestigenden Bereiche einer neu zu erstellenden Schicht 50 freigelassen, die anderen Bereiche der Glasplatte sind für die elektromagnetische Strahlung der Strahlungsquelle 100 im Wesentlichen undurchdringbar ausgebildet, beispielweise geschwärzt. Diese Ausgestaltung zeigt somit eine Ausgestaltung, in der die bereits eingangs erläuterte Sintermask-Technologie oder SMS-Technologie zum Einsatz kommt.

Im Übrigen bildet hier die Trägerplatte 28 zusammen seitlichen Wänden einen Auffangbehälter 40, in dem nicht erhärtetes Beschichtungsfasermaterial oberhalb der Trägerplatte 28 verbleibt. Die Wände können gegenüber der Trägerplatte 28 ortsfest angeordnet sein.

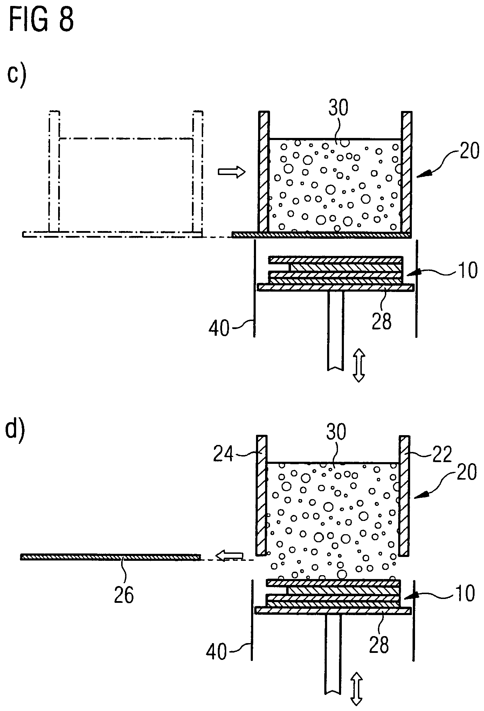

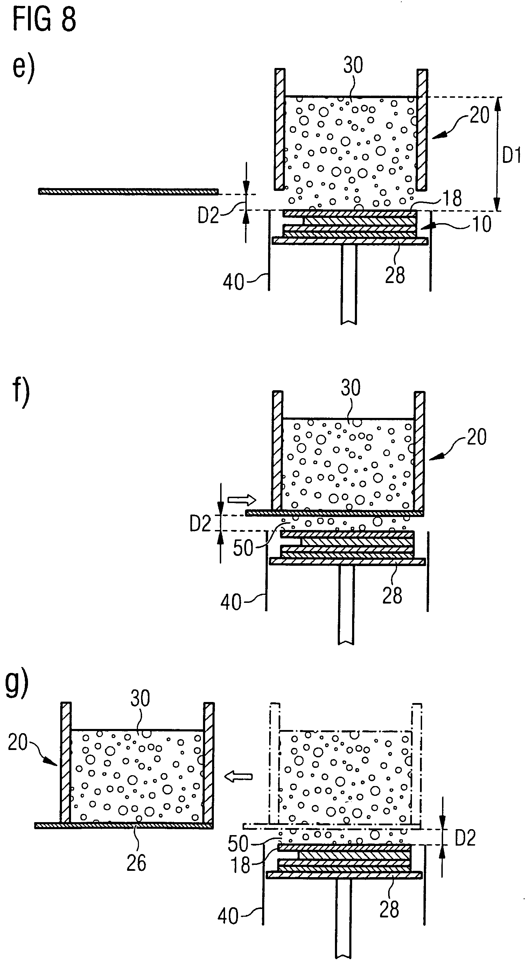

Aus den nachfolgenden Sequenzen gemäß den Fig. 8b)-8g) ist ersichtlich, dass der Behälter 20 beweglich gelagert ist, insbesondere ist er in den dargestellten Ansichten gemäß der Fig. 8 horizontal bewegbar, d.h. seitlich vom Körper 10 bis über den Körper 10 anordbar. Zudem ist der Behälterboden 26 gegenüber den Wänden 22, 24 verschieblich gelagert.

Entsprechend der Ansicht gemäß der Fig. 8a) ist die Schicht 18 des herzustellenden Körpers 10 mittels der bekannten Techniken erhärtet bzw. verfestigt worden. Zur Herstellung einer neuen Faserschicht 50 wird nun die Trägerplatte 28 mit den bereits erstellten und erhärteten Faserschichten 14, 16, 18 um eine bestimmte Weglänge nach unten verfahren. Dieser Schritt ist in der Fig. 8b) dargestellt.

Wie in der Fig. 8c) gezeigt, wird nun der Behälter 20 über die zuletzt hergestellte Faserschicht 18 verfahren. Daraufhin wird gemäß der Darstellung der Fig. 8d) der Behälterboden 26 in der gezeigten Ansicht nach links herausgezogen. Dabei rutscht das Faserpulver 30 im Behälter 20 nach unten und bedeckt die zuletzt hergestellte Faserschicht 18. Diese Verfahrensphase ist auch noch in der Fig. 8e) genauer gezeigt. Durch das Wegziehen oder Herausschieben des Behälterbodens 26 ist somit eine Faserschicht 50 aus losem Fasern mit großer Dicke D1 erzielt, die höher oder dicker ist als die tatsächlich zu erstellende Faserschichtstärke bzw. -dicke D2.

Es wird nun im Schritt gemäß Fig. 8f) das Bodenblech 26 eingefahren, wodurch die Schichtdicke D2 erzielt wird. D2 ist die entgültige Faserschichtdicke, falls nach dem Einfahren des Trennelements 26 kein Verpressen bzw. Verdichten mehr stattfindet. Mit anderen Worten: Durch den in der Fig. 8 dargestellten beispielhaften Verfahrensablauf wird zuerst eine Faserschicht auf der zuletzt erstellten Faserschicht 18 aus zu verfestigendem Material 30 gebildet, die eine höhere Schichtstärke bzw. Schichtdicke hat als die, die später dann als endgültige Schichtdicke D2 gewünscht wird. Durch das Wiedereinfahren des Bodens 26 unter den Behälter 20 wird die Schichtdicke D2 der neu herzustellenden Faserschicht 50 erzielt. Dies ist insbesondere in der Fig. 8f) gut zu erkennen.

Sodann wird im Schritt gemäß Fig. 8g) der Behälter 20 mit dem wieder eingefahrenen Trennelement 26 zurück in die linke Ausgangsstellung gefahren. Nachdem nun durch das Herausfahren des Behälters 20 zusammen mit dem Bodenblech 26, das hier als Trennelement funktioniert, ist die neue Faserschicht 50 mit gewünschter Schichtdicke D2 auf der zuletzt verfestigten Faserschicht 18 ausgebildet. Es kann nun mittels der eingangs erwähnten Strahlungsquelle 100 die gewünschte selektive Verfestigung bzw. Erhärtung des losen Faserbeschichtungsmaterials 30 der Faserschicht 50 durchgeführt werden. Danach können mit einer neuen Sequenz der Verfahrensschritte gemäß Fig. 8a)-8g) weitere Faserschichten des zu bildenden Körpers 10 erzeugt werden.

Eine mögliche alternative Ausführungsform kann auch noch einen weiteren Schritt vorsehen, bei dem zwischen dem Schritt gemäß Fig. 8f) und dem Schritt gemäß Fig. 8g) die Trägerplatte 28 etwas nach oben verfahren wird, wodurch die erstellte Faserschicht 50 verdichtet wird, da ja der Boden 26 sich noch oberhalb der Faserschicht 50 befindet. Alternativ kann der Behälter 20 um eine definierte Wegstrecke nach unten verfahren werden, um so die Faserschicht 50 auf die vorgegebene endgültige Schichtdicke D2 zu verdichten.

Erst nach dem eventuellen Verdichtungsschritt erfolgt dann das Wiederzurückfahren des Behälters 20, wie es in der Fig. 8g) dargestellt ist. Dieser mögliche Sonderfall eines erfindungsgemäßen Ausführungsbeispiels für ein Verfahren zum Herstellen eines dreidimensionalen Körpers 10 kann bei bestimmten Fasermaterialien vorteilhaft sein, insbesondere um eine höhere Dichte in der zu erstellenden Schicht 50 zu erzielen.

Den zuvor erläuterten Verfahren zur Herstellung eines dreidimensionalen Körpers 10 aus mehreren Faserschichten 12, 14, 16, 18 ist gemein, dass erstmals beim Erstellen der endgültigen Schichtdicke D2 der herzustellenden Faserschicht 50 die hierbei wirkenden Kräfte auf die zu erstellende Faserschicht 50 wie auch auf die darunter liegende Schicht 18 sowie eventuell auf die weiteren Faserschichten 12, 14, 16 geringer sind als bisher und damit die unter Umständen auftretenden Probleme unter Umständen vermieden werden können.

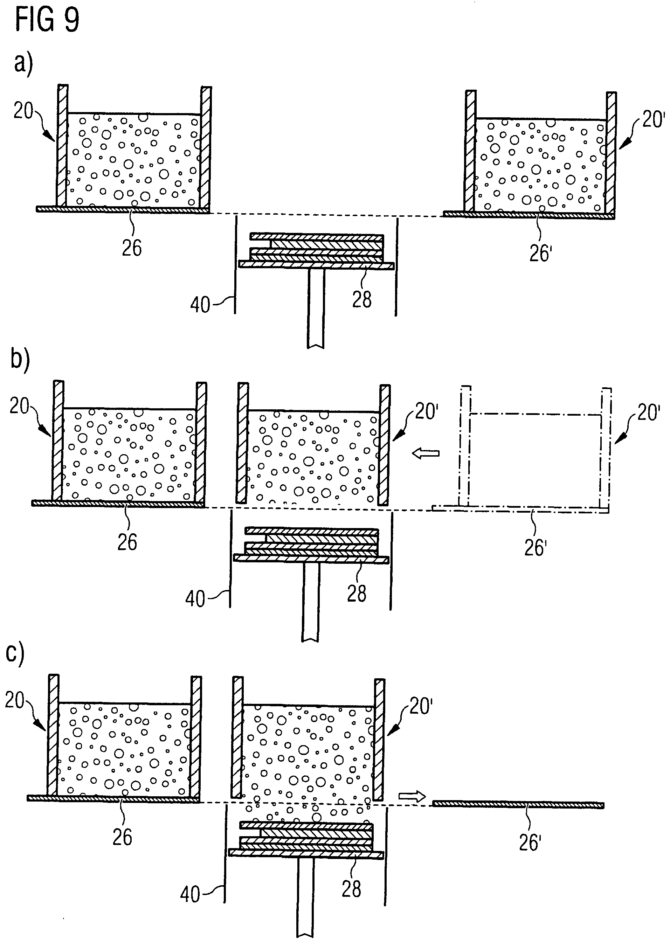

Die Fig. 9a)-9c) zeigt eine alternative Ausgestaltung einer erfindungsgemäßen Verfahrensweise und Vorrichtung zur Herstellung eines dreidimensionalen Körpers 10. Hier ist rechts und links des herzustellenden Körpers 10 jeweils ein Behälter 20, 20' vorhanden. Grundsätzlich kann ein solcher Behälter 20, 20' wie der Behälter 20 gemäß der Fig. 8 ausgebildet sein. In einem ersten Schritt wird einer der Behälter 20, hier gemäß Fig. 9a) der auf der rechten Seite befindliche Behälter 20', über den herzustellenden Körper 10 verfahren. Dann wird das Bodenblech 20' dieses Behälters gemäß der Fig. 8d) herausgefahren. Damit entspricht dieser Verfahrenszustand gemäß Fig. 9c) der in der Fig. 8d) gezeigten Phase des Verfahrens. Die weiteren Verfahrensschritte können nun gemäß Fig. 8e)-8g) durchgeführt werden. Entsprechend kann auf die obigen Ausführungsformen und Erläuterungen verwiesen werden.

Danach kann entweder der auf der rechten Seite befindliche Behälter 20' wieder über den zu erstellenden Körper 10 verfahren werden, oder der andere, auf der linken Seite befindlichen Behälter 20 über den Schichtkörper 10 zu verfahren, um in der zuvor erläuterten Weise eine weitere Schicht 50 zu erzeugen. Vorteilhaft bei der in der Fig. 9 gezeigten Ausführungsform ist, dass die Behälter 20, 20' unterschiedliche Materialien bevorraten können, so dass ein Körper 10 mit aus unterschiedlichen Fasermaterialien bestehenden Faserschichten gemäß dem hier gezeigten Verfahren gefertigt werden kann.

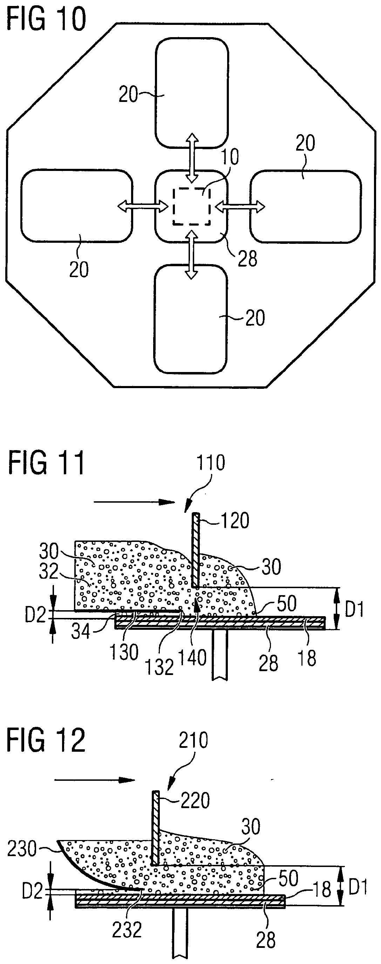

Es ist grundsätzlich auch möglich, mehr als zwei Behälter 20, 20' mit unterschiedlichen Fasermaterialien 30 vorzusehen. So ist beispielweise in der Fig. 10 eine Ausführungsform gezeigt, bei der vier Behälter 20 vorhanden sind, die jeweils unterschiedliche Fasermaterialien beinhalten. Hier kann jeder Behälter gegenüber dem zu erstellenden Schichtkörper 10 verfahren werden. Die Anlage gemäß der Fig. 10 ist recht kompakt. Damit ist es gemäß der Darstellung der Ausführungsform der Fig. 10 möglich, einen Körper 10 aus vier verschiedenen Materialien zu erstellen. Insbesondere können dadurch an Umgebungsbedingungen angepasste Körper 10 mit besonderen Eigenschaften in bestimmten Bereichen verschiedener Faserschichten 12, 14, 16, 18, 50 geschaffen werden.

Grundsätzlich kann durch die erfindungsgemäße Verfahrensweise jeweils trotz z.B. unterschiedlicher Fasermaterialien 30 die Verfahrensdauer zur Erstellung des dreidimensionalen Körpers 10 weiterhin kurz gehalten werden, da nur unterschiedliche Behälter 26 mit den verschiedenen Materialien 30 über den zu erstellenden Körper 10 zu verfahren sind.

Die Fig. 11 zeigt eine beispielhafte Ausgestaltung einer kombinierten Materialaufbring- und Reduziereinrichtung, wie sie für ein erfindungsgemäßes Verfahren eingesetzt werden kann. Wie bei der zuvor erläuterten Ausführungsform ist hier ein Träger 28 in der Höhe verstellbar vorhanden, auf dem der zu erstellende Körper 10 auszubilden ist. In der hier gezeigten Ausführungsform ist bereits eine Faserschicht 18 des zu erstellenden Körpers 10 auf der Trägerplatte 28 erstellt. Es wird nun von links her die kombinierte Materialaufbring- und Reduziereinrichtung 110 über den zu erstellenden Körper 10 verfahren. Dabei befindet sich Faserpulver 30 in großer Dicke D1 vor einer senkrecht stehenden Platte 120, die zwischen der zuletzt erstellten Schicht 18 und einer unteren Kante einen Spalt 140 freilässt. Dieser Spalt 140 hat eine Breite, die größer ist als die am Ende des Aufbringvorgangs zu erstellende Schichtdicke D2. Eine horizontale Trennplatte 130 ist hinter der senkrechten Trennplatte 120 angeordnet. Durch sie wird die gewünschte endgültige Schichtdicke D2 festgelegt.

Diese Trennplatte 130 hat eine schmale Vorderkante 132, um das Beschichtungsmaterial 30, das in großer Dicke D1 auf der bereits erstellten Faserschicht 18 aufgebracht ist, in einen oberen Teil 31 und einen unteren Teil 34 aufzuteilen. Dabei wirken wohl im Wesentlichen nur vertikale Kräfte, aber keine Scher- oder Schubkräfte, die möglicherweise nicht nur für die zu erstellende Faserschicht 50 nachteilig sein können, sondern auch für die bereits erstellte Faserschicht 18. Das Beschichtungsmaterial 32, das sich oberhalb der Trennplatte 130 befindet, kann auf Grund der Ausgestaltung der Trennplatte 130 keine Kräfte auf die bereits erstellten Faserschichten 18 oder die zu erstellende Faserschicht 50 ausüben. Gleichzeitig kann auf Grund möglicherweise besonderer Gleiteigenschaften auf der Unterseite des Trennelements 130 eine einwandfreie Oberfläche und Schichtdicke D2 erzeugt werden.

In dem hier gezeigten Ausführungsbeispiel gemäß der Fig. 11 wird also diese kombinierte Materialaufbring- und Reduziereinrichtung 110 soweit nach rechts verschoben, dass insgesamt auf dem Träger 28 eine definierte Schicht aus unverfestigtem Fasern erzeugt wird. Dann kann die notwendige Verfestigung an den vorbestimmten Stellen der Faserschicht 50 erfolgen. Dann kann ein weiterer Behälter entsprechend über den Träger 28 geführt werden, oder z.B. wird die Einheit 110 gedreht und dann zur Erzeugung einer neuen Faserschicht 50 nunmehr von der in der Fig. 11 gezeigten rechten Seite auf die linke Seite verfahren. Grundsätzlich ist es auch möglich, dass eine solche Einheit 110 auf einer Kreisbahn bewegt wird. Dabei würde dann nach Aufbringen der Faserschicht 50 die Faserschicht 50 freiliegen, so dass sie in gewünschter, bekannter Weise verfestigt wird. Die Einheit 110 würde nach Vollendung einer Umdrehung zur Erzielung einer neuen Faserschicht 50 zurückkehren. Hierzu ist im Übrigen anzumerken, dass natürlich nach dem Verfestigen der Faserschicht 50 der Träger 28 um die gewünschte neue Schichtstärke D2 nach unten verfahren wird, so dass eine neue Faserschicht 50 mittels der Einheit 110 erzeugt werden kann.

Die Fig. 12 zeigt eine der Fig. 11 sehr ähnliche Ausgestaltung einer Einheit 210, die grundsätzlich der Einheit 110 entspricht. Anstatt der flachen Trennplatte 130 ist hier die Trennplatte 230 nach oben gebogen. Dadurch wird erreicht, dass unmittelbar nach dem Aufbringen des Materials 30 an der Vorderkante 232 das Material 30, hier Fasern, der zu erzeugenden Faserschicht 50 nicht mehr an der Unterseite der Trenneinrichtung 230 entlang gleitet. Dadurch können eventuelle Anhaftungen etc. vermieden werden, gleichzeitig aber wird u.U. weiterhin verhindert, dass das oberhalb der gebogenen Trennplatte 230 befindliche Beschichtungsmaterial 30 Kräfte auf die zu erstellende Faserschicht 50 oder darunterliegende Faserschichten 18 etc. ausübt. Die Ausgestaltung der Einheit 210 gemäß der Fig. 12 ist ansonsten gleich der Ausgestaltung der Einheit 110 auszuführen. Sie weist ebenfalls eine senkrechte Trennwand 220 auf.

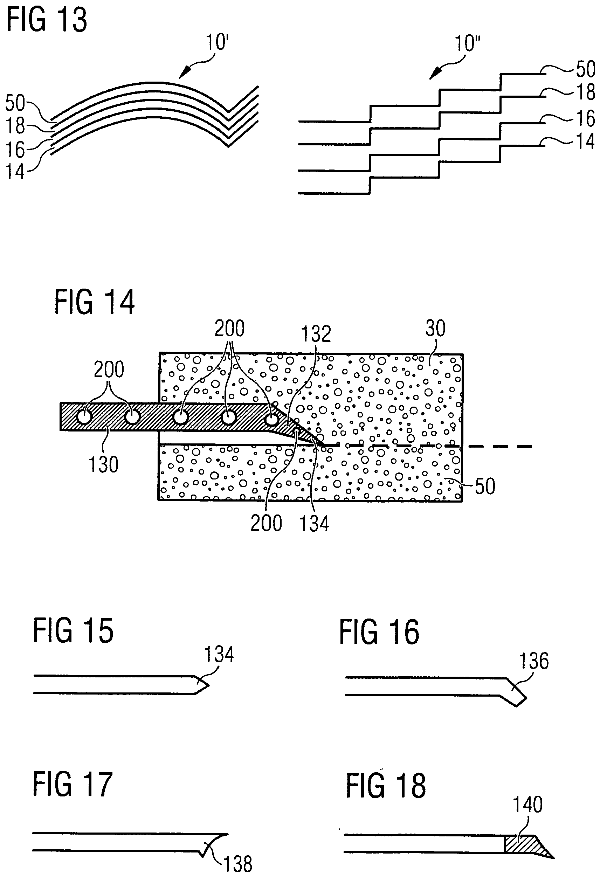

Die Fig. 13 zeigt beispielhafte Oberflächenausgestaltungen von Schichten. Auf Grund der gezeigten erfindungsgemäßen Verfahrensweise ist es nämlich ohne weiteres auch möglich, nicht nur plane neue Faserschichten 50 mit definierter Schichtdicke D2 zu erzeugen, sondern es können auch gewellte oder gezackte neue Faserschichten 50 erzeugt werden, die dann zu Körpern 10', 10" führen, die keine einzelnen ebenen Faserschichten 12, 14, 16, 18, 50 aufweisen, sondern gestufte oder gewellte Oberflächenformen haben.

Die Fig. 14 zeigt ein Detail möglicher Trenneinrichtungen, hier der Platte 130, wie sie beispielsweise bei der Ausführungsform gemäß den Fig. 11 und 12 zum Einsatz kommen können. Das Trennelement 130 weist hier die Vorderkante 132 auf, die speziell in eine äußerst dünne Schneide 134 ausläuft, so dass eine problemlose Trennung des Materials 30 erfolgen kann und dabei die neu zu erstellende Schicht 50 mit definierter Schichtstärke D2 geschaffen wird. Dabei hat bei dieser beispielhaften Ausführungsform der Platte 130 die Schneide 134 einen Hinterschnitt, so dass unmittelbar hinter der Schneide 134 das Material der neuen Schicht 50 nicht mehr an der Platte 130 oder der Vorderkante 132 entlang gleitet, wodurch unter Umständen auftretende Ablösungsprobleme vermieden werden.

Anzumerken ist, dass in einer beispielhaften Ausführungsform in dem Trennelement 130 und/oder der Schneide 134 Kühlelemente wie z.B. Kühlleitungen 200 vorhanden sind, um eine geeignete Kühlung einer zu verfestigenden Schicht 50 erzielen zu können. Hier sind beispielsweise Kühlleitungen 200 schlangenlinienförmig im Trennelement 130 ausgebildet, durch die ein Kühlmedium wie z.B. Wasser oder andere Fluide strömen. Die Kühlleitungen 200 sind in einen (nicht gezeigten) Kühlkreislauf mit entsprechenden Elementen eingegliedert.

Alternativ kann eine entsprechende Ausgestaltung auch zur gleichmäßigen Erwärmung des Trennelements 130 und/oder der Schneide 134 vorgesehen sein. Es ist auch eine Kombination von Kühl- und Wärmeelementen 200 in dem Trennelement 130 denkbar. Beispielsweise könnte hierzu entweder ein kühlendes oder erwärmendes Fluid durch die Leitungen 200 gepumpt werden.

Die Fig. 15 bis 18 zeigen weitere beispielhafte Ausgestaltungen von Vorderkanten von Trennelementen, die beispielsweise in den Einheiten 110, 210 gemäß den Fig. 11 und 12 aber auch in den Einrichtungen gemäß den Fig. 9 und 10 eingesetzt werden können. So zeigt die Fig. 14 eine Ausgestaltung mit oben und unten spitz zulaufender Kante oder Schneide 134. Die Fig. 15 hat wiederum eine der Fig. 14 gleichende Ausgestaltung, wobei die Vorderkante etwas anders ausgestaltet ist, nämlich mit einer schräg nach vorne zulaufenden Spitze und Hinterschneidung. Die Fig. 17 wiederum zeigt eine Ausgestaltung mit Hinterschneidung, wobei eine Abtrennfläche und leichte Gleitkante 138 an der Vorderkante geschaffen ist. Schließlich zeigt die Fig. 18 eine der Fig. 14 sehr ähnliche Ausgestaltung der Vorderkante 140 für ein Trennelement 130.

## Patentansprüche

1. Verfahren zum Herstellen eines Formkörpers (10; 517), bei dem
- einzelne, lose Fasern (509) in einer definierten Schichtdicke zur Bildung einer Faserschicht (14, 16, 18; 519) ausgebreitet werden,
- gezielt Energie in die erstellte Faserschicht (14, 16, 18; 519) eingebracht wird, sodass lose Fasern (509) in der Faserschicht (14, 16, 18; 519) in vorbestimmten Bereichen (520) miteinander mindestens an Faserabschnitten eine Verbindung eingehen und damit verfestigte Bereiche in dieser Faserschicht (14, 16, 18; 519) bilden und dabei diese verfestigten Bereiche der Faserschicht (14, 16, 18; 519) mit den verfestigten Bereichen einer bereits vorhandenen, benachbarten Faserschicht (19) verbunden werden, und
- die voranstehenden Verfahrensschritte so oft wiederholt werden, bis ein schichtweise aufgebauter, dreidimensionaler Formkörper (10; 517) mit der gewünschten Kontur erzeugt ist.

2. Verfahren nach Anspruch 1, **dadurch gekennzeichnet, dass** Fasern (509) verwendet werden, die durch Bestrahlung oder durch ein Reaktionsmittel zumindest an Faserabschnitten miteinander verkleben, verschmelzen oder reagieren.

3. Verfahren nach Anspruch 1 oder 2, **dadurch gekennzeichnet, dass** die Fasern (509) aus unterschiedlichem Material bestehen und/oder unterschiedliche Abmessungen enthalten.

4. Verfahren nach einem der voranstehenden Ansprüche, **dadurch gekennzeichnet, dass** der mittlere Durchmesser der Fasern (509) zwischen 0,001mm und 0,5 mm beträgt.

5. Verfahren nach einem der voranstehenden Ansprüche, **dadurch gekennzeichnet, dass** das Verhältnis von mittlerem Durchmesser zur mittleren Länge der Fasern (509) zwischen 0,1 und 1000 beträgt.

6. Verfahren nach einem der voranstehenden Ansprüche, **dadurch gekennzeichnet, dass** die Fasern (509) zumindest zum Teil Endflächen aufweisen, die an den Kanten gebrochen sind.

7. Verfahren nach einem der voranstehenden Ansprüche, **dadurch gekennzeichnet, dass** die Fasern (509) wenigstens eines der folgenden Materialien enthalten: Thermoplaste wie PP, PET, PEEK, PA, PLA, ABS, PC und PBT.

8. Verfahren nach einem der voranstehenden Ansprüche, **dadurch gekennzeichnet, dass** den Fasern (509) zumindest ein Füllstoff (511) beigemischt ist.

9. Verfahren nach Anspruch 8, **dadurch gekennzeichnet, dass** der Füllstoff (511) wenigstens eines der folgenden Materialien enthält: Ruß, Carbon, Glas, Metalloxid, Keramik.

10. Verfahren nach einem der Ansprüche 9 oder 10, **dadurch gekennzeichnet, dass** der Füllstoff (511) nicht faserförmig ist.

11. Verfahren nach Anspruch 10, **dadurch gekennzeichnet, dass** eine maximale Abmessung eines Füllstoffpartikels (511) zwischen 1 nm und 100 µm beträgt.

12. Formkörper, umfassend eine Vielzahl von aufeinander liegenden und miteinander verbundenen Faserschichten (14, 16, 18; 519) aus abgelängten Faserstücken (509) aus einem für ein Solid Freeform Fabrication-Verfahren geeigneten Material, **dadurch gekennzeichnet, dass** die Faserstücke (509) eine längliche Faserform mit einem mittleren Durchmesser zwischen 0,01 mm und 0,1 mm haben und durch gezielte Einbringung von Energie zumindest an Faserabschnitten so miteinander verklebt oder verschmolzen sind, dass verfestigte Bereiche einer Faserschicht (14, 16, 18; 519) mit verfestigten Bereichen einer benachbarten Faserschicht (19) verbunden sind.

13. Verwendung von Fasern (509), die derart ausgebildet sind, dass sie durch gezielte Einbringung von Energie zumindest an Faserabschnitten miteinander verkleben oder verschmelzen, zur Herstellung eines aus einzelnen, miteinander verbundenen Schichten (14, 16, 18; 519) bestehenden Formkörpers (10; 517) nach Anspruch 12 gemäß einem Solid Freeform Fabrication-Verfahren.

## Claims

1. A method for producing a molded body (10; 517), in which:
- individual, lose fibres (509) are spread with a defined layer thickness for forming a fibre layer (10, 16, 18; 519),
- energy is selectively supplied to the generated fibre layer (14, 16, 18; 519), so that lose fibres (509) in the fibre layer (14, 16, 18; 519) are connected to each other in predetermined regions (520), at least in fibre sections, hence forming solidified portions in said fibre layer (14, 16, 18; 519), thereby connecting said solidified portions of the fibre layer (14, 16, 18; 519) with the solidified portions of an already existing, adjacent fibre layer (19), and
- the above method steps are repeated until a three-dimensional molded body (10; 517), which is formed in layers and which has a desired contour, is produced.

2. The method according to claim 1, **characterized in that** fibres (509) are used, which adhere to each other, fuse with each other, or react with each other, at least in fibre sections by selectively supplying energy, or by means of reactant.

3. The method according to claims 1 or 2, **characterized in that** the fibres (509) consist of different material and/or have different dimensions.

4. The method according to one of the preceding claims, **characterized in that** the average diameter of the fibres (509) is between 0.001 mm and 0.5 mm.

5. The method according to one of the preceding claims **characterized in that** the ratio of average diameter and average length of the fibres (509) is between 0.1 and 1000.

6. The method according to one of the preceding claims, **characterized in that** the fibres (509) at least partially have end faces that are broken at their edges.

7. The method according to one of the preceding claims, **characterized in that** the fibres (509) contain at least one of the following materials: thermoplastics like PP, PET, PEEK, PA, PLA, ABS, PC and PBT.

8. The method according to one of the preceding claims, **characterized in that** at least one filler material (511) is added to the fibres (509).

9. The method according to claim 8, **characterized in that** the filler material (511) contains at least one of the following materials: soot, carbon, glass, metal oxide, ceramic.

10. The method according to one of the claims 9 or 10, **characterized in that** the filler material (511) is not fibre-shaped.

11. The method according to claim 10, **characterized in that** a maximal dimension of a filler material particle (511) is between 1 nm and 100 µm.

12. A molded body, comprising a plurality of fibre layers (14, 16, 18; 519), which are arranged one above the other and connected to each other, made of cutted to length fibres (509) of a material suitable for a Solid Freeform Fabrication-method, **characterized in that** the fibres (509) have an elongate fibre shape with an average diameter of between 0.01 mm and 0.1 mm and which are connected to each other, at least in fibre sections, by selective supply of energy such that they adhere to each other or are fused such that solidified portions of a fibre layer (14, 16, 18; 519) connect to solidified portions of an adjacent fibre layer (19).

13. Use of fibres (509), which are configured such that, at least in fibre sections, they adhere to each other or fuse, due to selective supply of energy, for manufacturing of a molded body (10; 517) according to claim 12, which consists of individual, connected to each other fibre layers (14, 16, 18; 519) according to a Solid Freeform Fabrication-method.

## Revendications

1. Procédé servant à fabriquer un corps moulé (10 ; 517), dans lequel
- diverses fibres (509) lâches sont dispersées en une épaisseur de couche définie afin de former une couche de fibres (14, 16, 18 ; 519),
- une énergie est introduite de manière ciblée dans la couche de fibres (14, 16, 18 ; 519) élaborée de sorte que des fibres (509) lâches dans la couche de fibres (14, 16, 18 ; 519) se lient entre elles dans des zones (520) prédéfinies au moins au niveau de segments de fibre et forment ainsi des zones renforcées dans ladite couche de fibres (14, 16, 18 ; 519) et que ce faisant lesdites zones renforcées de la couche de fibres (14, 16, 18 ; 519) soient reliées aux zones renforcées d'une couche de fibres (19) adjacente déjà présente, et
- les étapes de procédé ci-dessus sont répétées aussi souvent jusqu'à ce qu'un corps moulé (10 ; 517) tridimensionnel à structure stratifiée avec le contour souhaité soit produit.

2. Procédé selon la revendication 1, **caractérisé en ce que** des fibres (509) sont utilisées, qui s'assemblent par collage, par fusion les unes aux autres ou réagissent les unes avec les autres du fait de l'exposition à un rayonnement ou du fait d'un agent de réaction.

3. Procédé selon la revendication 1 ou 2, **caractérisé en ce que** les fibres (506) sont constituées d'un matériau différent et/ou contiennent des dimensions différentes.

4. Procédé selon l'une quelconque des revendications précédentes, **caractérisé en ce que** le diamètre moyen des fibres (509) est compris entre 0,001 mm et 0,5 mm.

5. Procédé selon l'une quelconque des revendications précédentes, **caractérisé en ce que** le rapport entre le diamètre moyen et la longueur moyenne des fibres (509) est compris entre 0,1 et 1 000.

6. Procédé selon l'une quelconque des revendications précédentes, **caractérisé en ce que** les fibres (509) présentent au moins en partie des surfaces d'extrémité, qui sont cassées au niveau des bords.

7. Procédé selon l'une quelconque des revendications précédentes, **caractérisé en ce que** les fibres (509) contiennent au moins un des matériaux suivants : des matières thermoplastiques telles que du PP, du PET, du PEEK, du PA, du PLA, de l'ABS, du PC ou du PBT.

8. Procédé selon l'une quelconque des revendications précédentes, **caractérisé en ce qu'**au moins une charge (511) est mélangée aux fibres (509).

9. Procédé selon la revendication 8, **caractérisé en ce que** la charge (511) contient au moins un des matériaux suivants : de la suie, du carbone, du verre, de l'oxyde de métal, de la céramique.

10. Procédé selon l'une quelconque des revendications 9 ou 10, **caractérisé en ce que** la charge (511) ne présente pas une forme de fibre.

11. Procédé selon la revendication 10, **caractérisé en ce qu'**une dimension maximale d'une particule de charge (511) est comprise entre 1 nm et 100 µm.

12. Corps moulé comprenant une pluralité de couches de fibres (14, 16, 18 ; 519) situées les unes sur les autres et reliées les unes aux autres, composées de pièces de fibres (509) découpées à la bonne longueur composées d'un matériau adapté pour un procédé de fabrication de formes libres solides, **caractérisé en ce que** les pièces de fibres (509) ont une forme de fibre allongée avec un diamètre moyen compris entre 0,01 mm et 0,1 mm et sont assemblées par collage ou par fusion par une introduction ciblée d'énergie au moins au niveau de segments de fibre de telle sorte que des zones renforcées d'une couche de fibres (14, 16, 18 ; 519) sont reliées à des zones renforcées d'une couche de fibres (19) adjacente.

13. Utilisation de fibres (509), qui sont réalisées de telle manière qu'elles sont assemblées par collage ou par fusion les unes aux autres par une introduction ciblée d'énergie au moins au niveau de segments de fibres, afin de fabriquer un corps moulé (10 ; 517) constitué de diverses couches (14, 16, 18 ; 519) reliées les unes aux autres selon la revendication 12 selon un procédé de fabrication de formes libres solides.
